(19) Europäisches Patentamt
European Patent Office
Office européen des brevets

(11) **EP 4 503 526 A1**

(12) **EUROPEAN PATENT APPLICATION**

(43) Date of publication:
**05.02.2025 Bulletin 2025/06**

(21) Application number: **23189851.1**

(22) Date of filing: **04.08.2023**

(51) International Patent Classification (IPC):
$H04L\ 25/03^{(2006.01)}$      $H04L\ 27/26^{(2006.01)}$

(52) Cooperative Patent Classification (CPC):
**H04L 27/26414; H04L 25/03834;** H04L 27/2607

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **YLI-KAAKINEN, Juha**
**33710 Tampere (FI)**

• **TIIROLA, Esa Tapani**
**90620 Oulu (FI)**
• **TERVO, Oskari**
**90630 Oulu (FI)**
• **Valkama, Mikko**
**37130 Nokia (FI)**

(74) Representative: **Script Intellectual Property LLP**
**Suite J, Anchor House**
**School Close**
**Chandlers Ford**
**Eastleigh, Hampshire SO53 4DY (GB)**

(54) **DECOMPOSITION OF WIDEBAND SIGNAL INTO SUB-BANDS**

(57)   There is provided an apparatus comprising means for: mapping frequency-domain symbols on a plurality of subcarriers into at least two sets, each set comprising symbols of at least one of the plurality of subcarriers; for each set: performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value; inserting a cyclic prefix into each time-domain symbol; concatenating the time-domain symbols resulting from the cyclic prefix insertion to create a sub-band waveform; and performing sub-band filtering, interpolation and combination based on the sub-band waveform for each of the sets to generate a single waveform.

Fig. 6

## Description

FIELD

The present application relates to a method, apparatus, system and computer program and in particular but not exclusively to waveform generation.

BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP). Another example of a communication system is a so-called 6G network.

SUMMARY

According to an aspect, there is provided an apparatus comprising means for mapping frequency-domain symbols on a plurality of subcarriers into at least two sets, each set comprising symbols of at least one of the plurality of subcarriers; for each set: performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value; inserting a cyclic prefix into each time-domain symbol; concatenating the time-domain symbols resulting from the cyclic prefix insertion to create a sub-band waveform; and performing sub-band filtering, interpolation and combination based on the sub-band waveform for each of the sets to generate a single waveform.

The two or more sets may comprise one or more active sets and one or more inactive sets, wherein the one or more active sets may contain mapped frequency-domain symbols and wherein the one or more inactive sets may not contain mapped frequency domain symbols.

Converting the rotated symbols from the frequency domain to the time domain may comprise applying an inverse fast Fourier transform to each of the rotated symbols.

The complex coefficient value may be $\phi_{m,b} = exp(-2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M - 1$, and
$N_{CP,k}$ is the length of the cyclic prefix.

Performing the sub-band filtering, interpolation and combination based on the sub-band waveforms to generate the single waveform may comprise: for each set: modulating the sub-band waveform to a first frequency; interpolating the modulated sub-band waveform; and modulating the interpolated modulated sub-band waveform to a second frequency; and combining the resulting interpolated and modulated sub-band waveform of each set into a single waveform.

The first frequency may be $c_m/M$, wherein: $M$ is the number of sets; and $c_m$ is an implementation specific parameter to control the spectrum of the sub-band waveform

The second frequency may be $f_m = f_{SCS}L/M[(M-1)/2 - m] - c_m$, wherein: $f_{SCS}$ is a subcarrier spacing frequency of the generated waveform; $L$ is the number of subcarriers, $M$ is the number of sets, $m$ is the number of the set, and is an integer value varying between zero and $M$ - 1, and $c_m$ is an implementation specific parameter to control the spectrum of the sub-band waveform.

The interpolating may comprise up-sampling and filtering the modulated sub-band waveforms.

The up-sampling may comprise inserting a number of zeros between samples of the modulated sub-band waveforms.

Performing the sub-band filtering, interpolation and combination based on the sub-band waveforms to generate the waveform may comprise: for each set: segmenting the symbols of the sub-band waveform into a plurality of overlapping blocks; converting the plurality of overlapping blocks to the frequency domain; applying a window function to each of the overlapping blocks in the frequency domain to generate a plurality of windowed blocks; converting the plurality of windowed blocks from the frequency domain to the time domain; and discarding a subset of each of the plurality of windowed blocks in the time domain; and combining the resulting time domain windowed blocks of each of the sets into a single waveform.

For each set the size of overlapping blocks Po may be less than the size of blocks P.

The number of discarded samples may be Qo = PoM, wherein $M$ is the number of sets.

Performing the sub-band filtering, interpolation and combination based on the sub-band waveforms to generate the waveform may comprise: for each set: converting the sub-band waveform from serial to parallel, wherein the resulting parallel components of the sub-band waveform are at least partially overlapping; converting the plurality of at least partially overlapping parallel components of the sub-band waveform into the frequency domain; applying a window function to the frequency domain parallel overlapping components of the sub-band waveform; removing overlapping blocks from the windowed frequency domain parallel overlapping components of the sub-band waveform and converting the resulting parallel components to a serial sub-band waveform; interpolating the serial sub-band waveform; and modulating the interpolated serial sub-band waveform to a third frequency; and combining the resulting modulated interpolated serial sub-band waveform of each set into a single waveform.

The third frequency may be $f_m = f_{SCS}L/M[(M-1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M$ - 1.

The interpolating may comprise up-sampling and filtering the modulated sub-band waveforms.

The up-sampling may comprise inserting a number of zeros between samples of the modulated sub-band waveforms.

The means may be further for: prior to the mapping, performing a discrete Fourier transform on time-domain symbols to generate the frequency-domain symbols to be mapped on the plurality of subcarriers.

According to an aspect there is provided an apparatus comprising means for: separating a single waveform into two or more sub-band waveforms; for each sub-band waveform: converting the sub-band waveform to a plurality of sequences of time-domain symbols; removing a cyclic prefix from each of the plurality of sequences of the time-domain symbols; converting each of the resulting plurality of symbols from the time domain to the frequency domain; performing symbol-wise rotation on the frequency domain symbols based on a complex coefficient value; and mapping the rotated frequency-domain symbols derived from each sub-band waveform into a single set comprising a plurality of rotated frequency domain symbols on a plurality of subcarriers.

Converting the plurality of symbols from the time domain to the frequency domain may comprise applying a fast Fourier transform to each of the plurality of symbols.

The complex coefficient value may be $\phi_{m,b} = exp(+2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M$ - 1, and
$N_{CP,k}$ is the length of the cyclic prefix.

The means may be for: for each sub-band waveform: demodulating the sub-band waveform from a second frequency; decimating the demodulated sub-band waveform; demodulating the decimated demodulated sub-band waveform from a first frequency; and converting the resulting sub-band waveform to the plurality of sequences of time-domain symbols.

The first frequency may be $c_m/M$, wherein: $M$ is the number of sets; and $c_m$ is an implementation specific parameter for enhancing parts of the spectrum of the sub-band waveform

The second frequency may be $f_m = f_{SCS}L/M[(M-1)/2 - m] - c_m$, wherein: $f_{SCS}$ is a subcarrier spacing frequency of the single waveform; $L$ is the number of subcarriers, $M$ is the number of sets, $m$ is the number of the set, and is an integer value varying between zero and

$M$ - 1, and $c_m$ is an implementation specific parameter for enhancing parts of the spectrum of the sub-band waveform.

The decimating may comprise filtering and down-sampling the demodulated sub-band waveforms.

The down-sampling may comprise removing a number of samples from samples of the demodulated sub-band waveforms.

Separating the single waveform into two or more sub-band waveforms may comprise: segmenting the single waveform into a plurality of partially overlapping blocks comprising one or more time-domain symbols; converting each partially overlapping block of time-domain symbols to the frequency domain; segmenting the resulting frequency-domain symbols into a plurality of partially overlapping sets of frequency domain symbols; and for each set: applying a window function to the set of frequency-domain symbols; converting the windowed set of frequency-domain symbols to the time-domain; removing overlapping parts from each of the partially overlapping sets of time-domain symbols and combining the resulting symbols into a sub-band waveform.

For each sub-band waveform the size of overlapping blocks Po may be less than the size of blocks P.

Separating the single waveform into two or more sub-band waveforms may comprise: for each sub-band waveform: demodulating the sub-band waveform from a third frequency; decimating the demodulated sub-band waveform; separating the decimated demodulated sub-band waveform into a plurality of partially overlapping blocks of symbols, wherein each block of symbols overlaps at least partially with at least one other block of symbols; and for each block: converting the block of partially overlapping symbols to the frequency-domain; applying a window function to the frequency-domain block of partially overlapping symbols; converting the resulting frequency-domain block of partially overlapping symbols to the time domain; and removing the overlapping symbols from each of the time-domain blocks of partially overlapping symbols and combining the resulting symbols into a sub-band waveform.

The third frequency may be $f_m = f_{SCS}L/M[(M - 1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M$ - 1.

The decimating may comprise filtering and down-sampling the modulated sub-band waveforms.

The down-sampling may comprise removing a number of samples from samples of the modulated sub-band waveforms.

The means may be further for: performing an inverse discrete Fourier transform on the mapped symbols to generate a plurality of time-domain symbols on the plurality of subcarriers.

According to an aspect, there is provided an apparatus comprising at least one processor and at least one memory storing instructions that, when executed by the at least one processor, cause the apparatus at least to: map frequency-domain symbols on a plurality of subcarriers into at least two sets, each set comprising symbols of at least one of the plurality of subcarriers; for each set: perform symbol-wise rotation based on a complex coefficient value and convert the rotated symbols from the frequency domain to the time domain; or convert the symbols from the frequency domain to the time domain and perform symbol-wise rotation on the time-domain symbols based on the complex coefficient value; insert a cyclic prefix into each time-domain symbol; concatenate the time-domain symbols resulting from the cyclic prefix insertion to create a sub-band waveform; and perform sub-band filtering, interpolation and combination based on the sub-band waveform for each of the sets to generate a single waveform.

The two or more sets may comprise one or more active sets and one or more inactive sets, wherein the one or more active sets may contain mapped frequency-domain symbols and wherein the one or more inactive sets may not contain mapped frequency domain symbols.

The at least one processor may further cause the apparatus to apply an inverse fast Fourier transform to each of the rotated symbols.

The complex coefficient value may be $\phi_{m,b} = exp(-2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M$ - 1, and
$N_{CP,k}$ is the length of the cyclic prefix.

The at least one processor may further cause the apparatus to: for each set: modulate the sub-band waveform to a first frequency; interpolate the modulated sub-band waveform; and modulate the interpolated modulated sub-band waveform to a second frequency; and combine the resulting interpolated and modulated sub-band waveform of each set into a single waveform.

The first frequency may be $c_m/M$, wherein: $M$ is the number of sets; and $c_m$ is an implementation specific parameter to control the spectrum of the sub-band waveform

The second frequency may be $f_m = f_{SCS}L/M[(M - 1)/2 - m] - c_m$, wherein: $f_{SCS}$ is a subcarrier spacing frequency of the generated waveform; $L$ is the number of subcarriers, $M$ is the number of sets, $m$ is the number of the set, and is an integer value varying between zero and $M$ - 1, and $c_m$ is an implementation specific parameter to control the spectrum of the sub-band waveform.

The at least one processor may further cause the apparatus to up-sample and filter the modulated sub-band waveforms.

The at least one processor may further cause the apparatus insert a number of zeros between samples of the modulated sub-band waveforms.

The at least one processor may further cause the apparatus to: for each set: segment the symbols of the sub-band waveform into a plurality of overlapping blocks; convert the plurality of overlapping blocks to the frequency domain; apply a window function to each of the overlapping blocks in the frequency domain to generate a plurality of windowed blocks; convert the plurality of windowed blocks from the frequency domain to the time domain; and discard a subset of each of the plurality of windowed blocks in the time domain; and combine the resulting time domain windowed blocks of each of the sets into a single waveform.

For each set the size of overlapping blocks Po may be less than the size of blocks P.

The number of discarded samples may be Qo = PoM, wherein $M$ is the number of sets.

The at least one processor may further cause the apparatus to: for each set: convert the sub-band waveform from serial to parallel, wherein the resulting parallel components of the sub-band waveform are at least partially overlapping; convert the plurality of at least partially overlapping parallel components of the sub-band waveform into the frequency domain; apply a window function to the frequency domain parallel overlapping components of the sub-band waveform; remove overlapping blocks from the windowed frequency domain parallel overlapping components of the sub-band waveform and convert the resulting parallel components to a serial sub-band waveform; interpolate the serial sub-band waveform; and modulate the interpolated serial sub-band waveform to a third frequency; and combining the resulting modulated interpolated serial sub-band waveform of each set into a single waveform.

The third frequency may be $f_m = f_{SCS}L/M[(M - 1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M$ - 1.

The at least one processor may further cause the apparatus to up-sample and filter the modulated sub-band waveforms.

The at least one processor may further cause the apparatus to insert a number of zeros between samples of the modulated sub-band waveforms.

The at least one processor may further cause the apparatus to: prior to the mapping, perform a discrete Fourier transform on time-domain symbols to generate the frequency-domain symbols to be mapped on the plurality of subcarriers.

According to an aspect, there is provided an apparatus comprising at least one processor and at least one memory storing instructions that, when executed by the at least one processor, cause the apparatus at least to: separate a single waveform into two or more sub-band waveforms; for each sub-band waveform: convert the sub-band waveform to a plurality of sequences of time-domain symbols; remove a cyclic prefix from each of the plurality of sequences of the time-domain symbols; convert each of the resulting plurality of symbols from the time domain to the frequency domain; perform symbol-wise rotation on the frequency domain symbols based on a complex coefficient value; and map the rotated frequency-domain symbols derived from each sub-band waveform into a single set comprising a plurality of rotated frequency domain symbols on a plurality of subcarriers.

The at least one processor may further cause the apparatus to apply a fast Fourier transform to each of the plurality of symbols.

The complex coefficient value may be $\phi_{m,b} = exp(+2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M$ - 1, and
$N_{CP,k}$ is the length of the cyclic prefix.

The at least one processor may further cause the apparatus to: for each sub-band waveform: demodulate the sub-band waveform from a second frequency; decimate the demodulated sub-band waveform; demodulate the decimated demodulated sub-band waveform from a first frequency; and convert the resulting sub-band waveform to the plurality of sequences of time-domain symbols.

The first frequency may be $c_m/M$, wherein: $M$ is the number of sets; and $c_m$ is an implementation specific parameter for enhancing parts of the spectrum of the sub-band waveform

The second frequency may be $f_m = f_{SCS}L/M[(M - 1)/2 - m] - c_m$, wherein: $f_{SCS}$ is a subcarrier spacing frequency of the single waveform; $L$ is the number of subcarriers, $M$ is the number of sets, $m$ is the number of the set, and is an integer value varying between zero and $M$ - 1, and $c_m$ is an implementation specific parameter for enhancing parts of the spectrum of the sub-band waveform.

The at least one processor may further cause the apparatus to filter and down-sample the demodulated sub-band waveforms.

The at least one processor may further cause the apparatus to remove a number of samples from samples of the demodulated sub-band waveforms.

The at least one processor may further cause the apparatus to: segment the single waveform into a plurality of partially overlapping blocks comprising one or more time-domain symbols; convert each partially overlapping block of time-domain symbols to the frequency domain; segment the resulting frequency-domain symbols into a plurality of partially overlapping sets of frequency domain symbols; and for each set: apply a window function to the set of frequency-domain symbols; convert the windowed set of frequency-domain symbols to the time-domain; remove overlapping symbols from each of the partially overlapping sets of time-domain symbols and combine the resulting symbols into a sub-band waveform.

For each sub-band waveform the size of overlapping blocks Po may be less than the size of blocks P.

The at least one processor may further cause the apparatus to: for each sub-band waveform: demodulate the sub-band waveform to a third frequency; decimate the demodulated sub-band waveform; separate the decimated demodulated sub-band waveform into a plurality of partially overlapping blocks of symbols, wherein each block of symbols overlaps at least partially with at least one other block of symbols; and for each block: convert the block of partially overlapping symbols to the time-domain; apply a window function to the time-domain block of partially overlapping symbols; convert the resulting time-domain block of partially overlapping symbols to the frequency domain; and remove the overlapping symbols from each of the time-domain blocks of partially overlapping symbols and combine the resulting symbols into a sub-band waveform.

The third frequency may be $f_m = f_{SCS}L/M[(M-1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M - 1$.

The at least one processor may further cause the apparatus to filter and down-sample the modulated sub-band waveforms.

The at least one processor may further cause the apparatus to remove a number of samples from samples of the modulated sub-band waveforms.

The at least one processor may further cause the apparatus to: perform an inverse discrete Fourier transform on the mapped symbols to generate a plurality of time-domain symbols on the plurality of subcarriers. According to an aspect, there is provided a method comprising: mapping frequency-domain symbols on a plurality of subcarriers into at least two sets, each set comprising symbols of at least one of the plurality of subcarriers; for each set: performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value; inserting a cyclic prefix into each time-domain symbol; concatenating the time-domain symbols resulting from the cyclic prefix insertion to create a sub-band waveform; and performing sub-band filtering, interpolation and combination based on the sub-band waveform for each of the sets to generate a single waveform.

The two or more sets may comprise one or more active sets and one or more inactive sets, wherein the one or more active sets may contain mapped frequency-domain symbols and wherein the one or more inactive sets may not contain mapped frequency domain symbols.

Converting the rotated symbols from the frequency domain to the time domain may comprise applying an inverse fast Fourier transform to each of the rotated symbols.

The complex coefficient value may be $\phi_{m,b} = exp(-2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M - 1$, and
$N_{CP,k}$ is the length of the cyclic prefix.

Performing the sub-band filtering, interpolation and combination based on the sub-band waveforms to generate the single waveform may comprise: for each set: modulating the sub-band waveform to a first frequency; interpolating the modulated sub-band waveform; and modulating the interpolated modulated sub-band waveform to a second frequency; and combining the resulting interpolated and modulated sub-band waveform of each set into a single waveform.

The first frequency may be $c_m/M$, wherein: $M$ is the number of sets; and $c_m$ is an implementation specific parameter to control the spectrum of the sub-band waveform

The second frequency may be $f_m = f_{SCS}L/M[(M-1)/2 - m] - c_m$, wherein: $f_{SCS}$ is a subcarrier spacing frequency of the generated waveform; $L$ is the number of subcarriers, $M$ is the number of sets, $m$ is the number of the set, and is an integer value varying between zero and $M - 1$, and $c_m$ is an implementation specific parameter to control the spectrum of the sub-band waveform.

The interpolating may comprise up-sampling and filtering the modulated sub-band waveforms.

The up-sampling may comprise inserting a number of zeros between samples of the modulated sub-band waveforms.

Performing the sub-band filtering, interpolation and combination based on the sub-band waveforms to generate the waveform may comprise: for each set: segmenting the symbols of the sub-band waveform into a plurality of overlapping blocks; converting the plurality of overlapping blocks to the frequency domain; applying a window function to each of the overlapping blocks in the frequency domain to generate a plurality of windowed blocks; converting the plurality of windowed blocks from the frequency domain to the time domain; and discarding a subset of each of the plurality of windowed blocks in the time domain; and combining the resulting time domain windowed blocks of each of the sets into a single waveform.

For each set the size of overlapping blocks Po may be less than the size of blocks P.

The number of discarded samples may be Qo = PoM, wherein $M$ is the number of sets.

Performing the sub-band filtering, interpolation and combination based on the sub-band waveforms to generate the waveform may comprise: for each set: converting the sub-band waveform from serial to parallel, wherein the resulting parallel components of the sub-band waveform are at least partially overlapping; converting the plurality of at least partially overlapping parallel components of the sub-band waveform into the frequency domain; applying a window function to the frequency domain parallel overlapping components of the sub-band waveform; removing overlapping blocks from the windowed frequency domain parallel overlapping components of the sub-band waveform and converting the resulting parallel components to a serial sub-band waveform; interpolating the serial sub-band waveform; and modulating the interpolated serial sub-band waveform to a third frequency; and combining the resulting modulated interpolated serial sub-band waveform of each set into a single waveform.

The third frequency may be $f_m = f_{SCS}L/M[(M - 1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M$ - 1.

The interpolating may comprise up-sampling and filtering the modulated sub-band waveforms.

The up-sampling may comprise inserting a number of zeros between samples of the modulated sub-band waveforms.

The method may comprise: prior to the mapping, performing a discrete Fourier transform on time-domain symbols to generate the frequency-domain symbols to be mapped on the plurality of subcarriers.

According to an aspect there is provided a method comprising: separating a single waveform into two or more sub-band waveforms; for each sub-band waveform: converting the sub-band waveform to a plurality of sequences of time-domain symbols; removing a cyclic prefix from each of the plurality of sequences of the time-domain symbols; converting each of the resulting plurality of symbols from the time domain to the frequency domain; performing symbol-wise rotation on the frequency domain symbols based on a complex coefficient value; and mapping the rotated frequency-domain symbols derived from each sub-band waveform into a single set comprising a plurality of rotated frequency domain symbols on a plurality of subcarriers.

Converting the plurality of symbols from the time domain to the frequency domain may comprise applying a fast Fourier transform to each of the plurality of symbols.

The complex coefficient value may be $\phi_{m,b} = exp(+2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M$ - 1, and
$N_{CP,k}$ is the length of the cyclic prefix.

The method may comprise: for each sub-band waveform: demodulating the sub-band waveform from a second frequency; decimating the demodulated sub-band waveform; demodulating the decimated demodulated sub-band waveform from a first frequency; and converting the resulting sub-band waveform to the plurality of sequences of time-domain symbols.

The first frequency may be $c_m/M$, wherein: $M$ is the number of sets; and $c_m$ is an implementation specific parameter for enhancing parts of the spectrum of the sub-band waveform

The second frequency may be $f_m = f_{SCS}L/M[(M - 1)/2 - m] - c_m$, wherein: $f_{SCS}$ is a subcarrier spacing frequency of the single waveform; $L$ is the number of subcarriers, $M$ is the number of sets, $m$ is the number of the set, and is an integer value varying between zero and $M$ - 1, and $c_m$ is an implementation specific parameter for enhancing parts of the spectrum of the sub-band waveform.

The decimating may comprise filtering and down-sampling the demodulated sub-band waveforms.

The down-sampling may comprise removing a number of samples from samples of the demodulated sub-band waveforms.

Separating the single waveform into two or more sub-band waveforms may comprise: segmenting the single waveform into a plurality of partially overlapping blocks comprising one or more time-domain symbols; converting each partially overlapping block of time-domain symbols to the frequency domain; segmenting the resulting frequency-domain symbols into a plurality of partially overlapping sets of frequency domain symbols; and for each set: applying a window function to the set of frequency-domain symbols; converting the windowed set of frequency-domain symbols to the time-domain; removing overlapping parts from each of the partially overlapping sets of time-domain symbols and combining the resulting symbols into a sub-band waveform.

For each sub-band waveform the size of overlapping blocks Po may be less than the size of blocks P.

Separating the single waveform into two or more sub-band waveforms may comprise: for each sub-band waveform: demodulating the sub-band waveform from a third frequency; decimating the demodulated sub-band waveform; separating the decimated demodulated sub-band waveform into a plurality of partially overlapping blocks of symbols, wherein each block of symbols overlaps at least partially with at least one other block of symbols; and for each block: converting the block of partially overlapping symbols to the frequency-domain; applying a window function to the frequency-domain block of partially overlapping symbols; converting the resulting frequency-domain block of partially overlapping symbols to the time domain; and removing the overlapping symbols from each of the time-domain blocks of partially overlapping symbols and combining the resulting symbols into a sub-band waveform.

The third frequency may be $f_m = f_{SCS}L/M[(M - 1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M$ - 1.

The decimating may comprise filtering and down-sampling the modulated sub-band waveforms.

The down-sampling may comprise removing a number of samples from samples of the modulated sub-band waveforms.

The method may comprise: performing an inverse discrete Fourier transform on the mapped symbols to generate a plurality of time-domain symbols on the plurality of subcarriers.

According to an aspect, there is provided a computer readable medium comprising instructions which, when executed by an apparatus, cause the apparatus to perform at least the following: mapping frequency-domain symbols on a plurality of subcarriers into at least two sets, each set comprising symbols of at least one of the plurality of subcarriers; for each set: performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value; inserting a cyclic prefix into each time-domain symbol; concatenating the time-domain symbols resulting from the cyclic prefix insertion to create a sub-band waveform; and performing sub-band filtering, interpolation and combination based on the sub-band waveform for each of the sets to generate a single waveform.

The two or more sets may comprise one or more active sets and one or more inactive sets, wherein the one or more active sets may contain mapped frequency-domain symbols and wherein the one or more inactive sets may not contain mapped frequency domain symbols.

Converting the rotated symbols from the frequency domain to the time domain may comprise applying an inverse fast Fourier transform to each of the rotated symbols.

The complex coefficient value may be $\phi_{m,b} = exp(-2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M$ - 1, and
$N_{CP,k}$ is the length of the cyclic prefix.

Performing the sub-band filtering, interpolation and combination based on the sub-band waveforms to generate the single waveform may comprise: for each set: modulating the sub-band waveform to a first frequency; interpolating the modulated sub-band waveform; and modulating the interpolated modulated sub-band waveform to a second frequency; and combining the resulting interpolated and modulated sub-band waveform of each set into a single waveform.

The first frequency may be $c_m/M$, wherein: $M$ is the number of sets; and $c_m$ is an implementation specific parameter to control the spectrum of the sub-band waveform

The second frequency may be $f_m = f_{SCS}L/M[(M - 1)/2 - m] - c_m$, wherein: $f_{SCS}$ is a subcarrier spacing frequency of the generated waveform; $L$ is the number of subcarriers, $M$ is the number of sets, $m$ is the number of the set, and is an integer value varying between zero and $M$ - 1, and $c_m$ is an implementation specific parameter to control the spectrum of the sub-band waveform.

The interpolating may comprise up-sampling and filtering the modulated sub-band waveforms.

The up-sampling may comprise inserting a number of zeros between samples of the modulated sub-band waveforms.

Performing the sub-band filtering, interpolation and combination based on the sub-band waveforms to generate the waveform may comprise: for each set: segmenting the symbols of the sub-band waveform into a plurality of overlapping blocks; converting the plurality of overlapping blocks to the frequency domain; applying a window function to each of the overlapping blocks in the frequency domain to generate a plurality of windowed blocks; converting the plurality of windowed blocks from the frequency domain to the time domain; and discarding a subset of each of the plurality of windowed blocks in the time domain; and combining the resulting time domain windowed blocks of each of the sets into a single waveform.

For each set the size of overlapping blocks Po may be less than the size of blocks P.

The number of discarded samples may be Qo = PoM, wherein $M$ is the number of sets.

Performing the sub-band filtering, interpolation and combination based on the sub-band waveforms to generate the waveform may comprise: for each set: converting the sub-band waveform from serial to parallel, wherein the resulting parallel components of the sub-band waveform are at least partially overlapping; converting the plurality of at least partially overlapping parallel components of the sub-band waveform into the frequency domain; applying a window function to the frequency domain parallel overlapping components of the sub-band waveform; removing overlapping blocks from the windowed frequency domain parallel overlapping components of the sub-band waveform and converting the resulting parallel components to a serial sub-band waveform; interpolating the serial sub-band waveform; and modulating the interpolated serial sub-band waveform to a third frequency; and combining the resulting modulated interpolated serial sub-band waveform of each set into a single waveform.

The third frequency may be $f_m = f_{SCS}L/M[(M - 1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M$ - 1.

The interpolating may comprise up-sampling and filtering the modulated sub-band waveforms.

The up-sampling may comprise inserting a number of zeros between samples of the modulated sub-band waveforms.

The instructions, when executed by the apparatus, may cause the apparatus to further perform: prior to the mapping, performing a discrete Fourier transform on time-domain symbols to generate the frequency-domain symbols to be mapped on the plurality of subcarriers.

According to an aspect, there is provided a computer readable medium comprising instructions which, when executed by an apparatus, cause the apparatus to perform at least the following: separating a single waveform into two or more sub-band waveforms; for each sub-band waveform: converting the sub-band waveform to a plurality of sequences of time-domain symbols; removing a cyclic prefix from each of the plurality of sequences of the time-domain symbols; converting each of the resulting plurality of symbols from the time domain to the frequency domain; performing symbol-wise rotation on the frequency domain symbols based on a complex coefficient value; and mapping the rotated frequency-domain symbols derived from each sub-band waveform into a single set comprising a plurality of rotated frequency domain symbols on a plurality of subcarriers.

Converting the plurality of symbols from the time domain to the frequency domain may comprise applying a fast Fourier transform to each of the plurality of symbols.

The complex coefficient value may be $\phi_{m,b} = exp(+2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M$ - 1, and
$N_{CP,k}$ is the length of the cyclic prefix.

The instructions, when executed by the apparatus, may cause the apparatus to further perform: for each sub-band waveform: demodulating the sub-band waveform from a second frequency; decimating the demodulated sub-band waveform; demodulating the decimated demodulated sub-band waveform from a first frequency; and converting the resulting sub-band waveform to the plurality of sequences of time-domain symbols.

The first frequency may be $c_m/M$, wherein: $M$ is the number of sets; and $c_m$ is an implementation specific parameter for enhancing parts of the spectrum of the sub-band waveform

The second frequency may be $f_m = f_{SCS}L/M[(M - 1)/2 - m] - c_m$, wherein: $f_{SCS}$ is a subcarrier spacing frequency of the single waveform; $L$ is the number of subcarriers, $M$ is the number of sets, $m$ is the number of the set, and is an integer value varying between zero and $M$ - 1, and $c_m$ is an implementation specific parameter for enhancing parts of the spectrum of the sub-band waveform.

The decimating may comprise filtering and down-sampling the demodulated sub-band waveforms.

The down-sampling may comprise removing a number of samples from samples of the demodulated sub-band waveforms.

Separating the single waveform into two or more sub-band waveforms may comprise: segmenting the single waveform into a plurality of partially overlapping blocks comprising one or more time-domain symbols; converting each partially overlapping block of time-domain symbols to the frequency domain; segmenting the resulting frequency-domain symbols into a plurality of partially overlapping sets of frequency domain symbols; and for each set: applying a window function to the set of frequency-domain symbols; converting the windowed set of frequency-domain symbols to the time-domain;

removing overlapping parts from each of the partially overlapping sets of time-domain symbols and combining the resulting symbols into a sub-band waveform.

For each sub-band waveform the size of overlapping blocks Po may be less than the size of blocks P.

Separating the single waveform into two or more sub-band waveforms may comprise: for each sub-band waveform: demodulating the sub-band waveform from a third frequency; decimating the demodulated sub-band waveform; separating the decimated demodulated sub-band waveform into a plurality of partially overlapping blocks of symbols, wherein each block of symbols overlaps at least partially with at least one other block of symbols; and for each block: converting the block of partially overlapping symbols to the frequency-domain; applying a window function to the frequency-domain block of partially overlapping symbols; converting the resulting frequency-domain block of partially overlapping symbols to the time domain; and removing the overlapping symbols from each of the time-domain blocks of partially overlapping symbols and combining the resulting symbols into a sub-band waveform.

The third frequency may be $f_m = f_{SCS}L/M[(M - 1)/2 - m]$, wherein: $f_{SCS}$ is a subcarrier spacing frequency of the single waveform; $L$ is the number of subcarriers, $M$ is the number of sets, and $m$ is the number of the set, and is an integer value varying between zero and $M - 1$.

The decimating may comprise filtering and down-sampling the modulated sub-band waveforms.

The down-sampling may comprise removing a number of samples from samples of the modulated sub-band waveforms.

The instructions, when executed by the apparatus, may cause the apparatus to further perform: performing an inverse discrete Fourier transform on the mapped symbols to generate a plurality of time-domain symbols on the plurality of subcarriers.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

DESCRIPTION OF FIGURES

Embodiments will now be described, by way of example only, with reference to the accompanying Figures in which:

Figure 1 shows a representation of a network system according to some example embodiments;
Figure 2 shows a representation of a control apparatus according to some example embodiments;
Figure 3 shows a representation of an apparatus according to some example embodiments;
Figure 4 shows a block diagram of an example of a conventional OFDM and DFT-s-OFDM waveform generation;
Figure 5 shows methods according to some examples;
Figure 6 shows a block diagram for OFDM or DFT-s-OFDM waveform generation according to some examples;
Figure 7 shows a block diagram for OFDM or DFT-s-OFDM symbol regeneration according to some examples;
Figure 8 shows an example power spectral density of a DFT-s-OFDM waveform realized using decomposed processing described in relation to Figures 6 and 7;
Figure 9 shows a block diagram of an example for OFDM waveform generation according to some examples using time-domain interpolation and combination;
Figures 10(a)-(d) show examples of spectral localization with and without modulation, before and after filtering;
Figure 11 shows an example PSD of an OFDM waveform achieved using decomposed processing as described in relation to Figure 9;
Figure 12 shows a block diagram of an example for OFDM waveform generation according to some examples using frequency domain interpolation and combination;
Figure 13 shows an example PSD of an OFDM waveform achieved using decomposed processing as described above in relation to Figure 12;
Figure 14 shows a block diagram of an example for OFDM waveform generation according to some examples using time domain interpolation and combination with additional frequency domain filtering;
Figure 15 shows an example PSD of an OFDM waveform achieved using decomposed processing as described above in relation to Figure 14.

DETAILED DESCRIPTION

A non-exhaustive list of some abbreviations used throughout the present disclosure is provided below for reference:

| | |
|---|---|
| ACLR | adjacent channel leakage ratio |
| BS | base station |
| CA | carrier aggregation |
| CC | composite carrier |
| CP | cyclic prefix |
| DFE | digital front end |
| DFT | discrete Fourier transform |
| DFT-s-OFDM | DFT spread OFDM |
| DL | downlink |
| EVM | error vector magnitude |
| FDE | frequency-domain equalizer |

| FDSS | frequency-domain spectral shaping |
| FFT | fast Fourier transform |
| FR | frequency range |
| IBE | in-band emissions |
| IDFT | inverse discrete Fourier transform |
| IFFT | inverse fast Fourier transform |
| MCS | modulation and coding scheme |
| MPR | maximum power reduction |
| MSK | minimum-shift keying |
| NR | New Radio |
| OBO | output back-off |
| OBW | occupied bandwidth |
| OFDM | orthogonal frequency-division multiplexing |
| OLA | overlap-and-add |
| OOB | out-of-band |
| PA | power amplifier |
| PAPR | peak-to-average power ratio |
| PRB | physical resource block |
| PSD | power spectral density |
| PSK | phase-shift keying |
| QAM | quadrature amplitude modulation |
| QPSK | quadrature phase-shift keying |
| RF | radio frequency |
| RX | receiver |
| SCS | subcarrier spacing |
| TX | transmitter |
| UE | user equipment |
| UL | uplink |
| WOLA | weighted overlap-and-add |

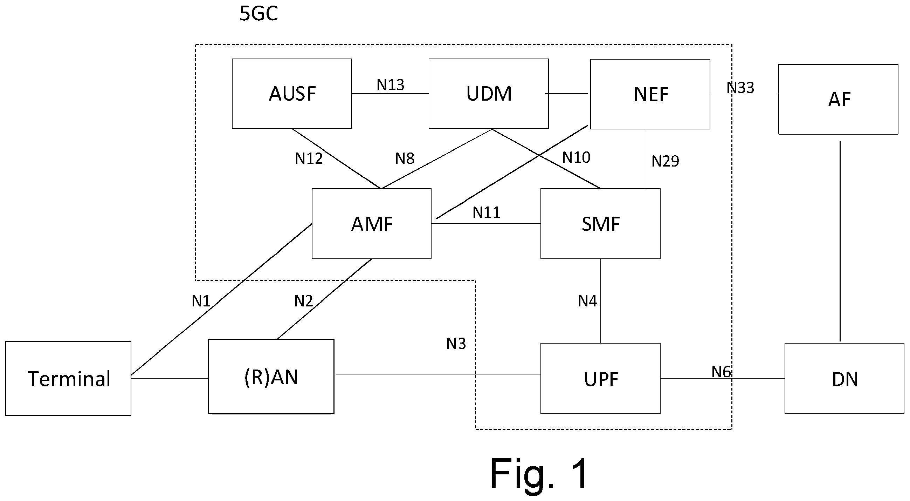

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions. The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF). Figure 1 also shows the various interfaces (N1, N2 etc.) that may be implemented between the various elements of the system. Similar functionality may be provided in a 6G system.

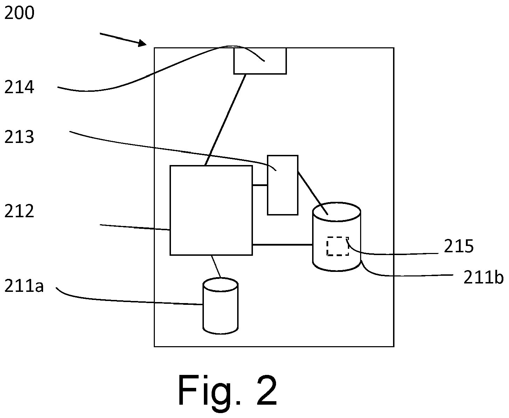

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

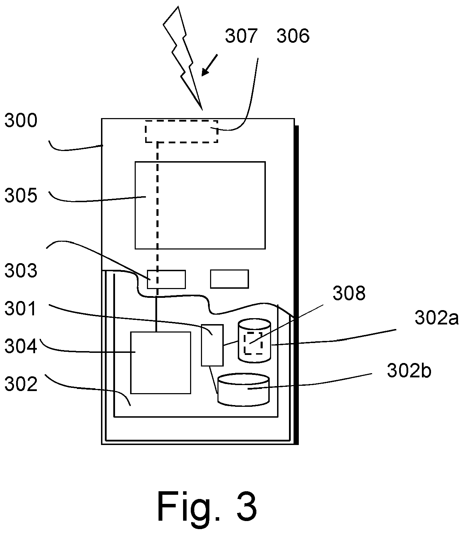

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

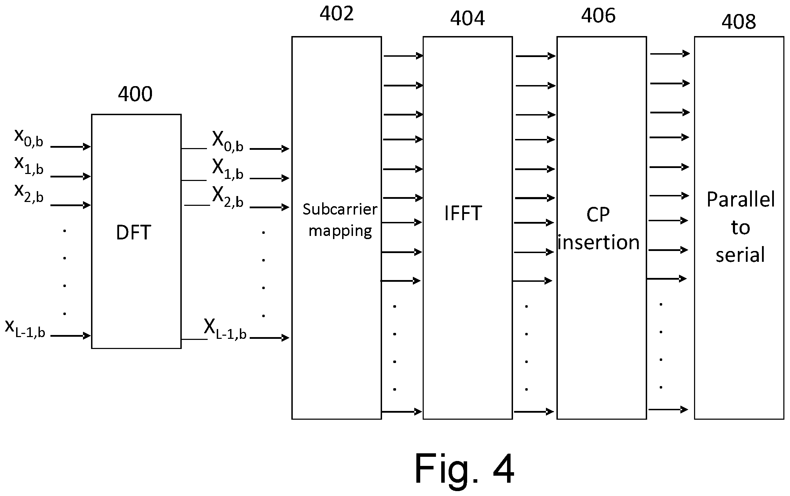

According to some existing standards, the maximum channel bandwidth (CBW) supported by the fifth-generation new radio (5G-NR) in frequency-range 1 (FR1) is 100 MHz. Figure 4 shows a block diagram of an example of a conventional OFDM and DFT-s-OFDM waveform generation. The block diagram comprises the steps of DFT 400, subcarrier mapping 402, inverse FFT 404, cyclic prefix (CP) insertion 406, and parallel to serial conversion 408.

In the example shown in Figure 4, b for $b = 0, 1, ..., B - 1$ is the OFDM/DFT-s-OFDM symbol index where $B$ is the number of OFDM or DFT-s-OFDM symbols.

In the case of DFT-s-OFDM, for $b$th multicarrier symbol, $L$ time-domain BPSK, QPSK, or QAM symbols $x_{\ell,b}$ for $\ell = 0, 1, ..., L - 1$ are converted to frequency domain using DFT (or FFT) of size $L$ at 400.

The output bins are mapped at 402 to input bins of the IFFT 404 of size $N$ (such that remaining $N - L$ bins are zeros) and the zero-padded frequency-domain bins are converted back to time domain.

A cyclic prefix (CP) of length $N_{CP,b}$ is inserted at 406 into the output of IFFT. The resulting DFT-s-OFDM symbols are converted from parallel to serial at 408, e.g. by concatenation. In the case of OFDM waveform, the DFT block 400 may be omitted, e.g., the inputs are L frequency-domain BPSK, QPSK, or QAM symbols $x_{\ell,b}$ for $\ell = 0, 1, ..., L - 1$. The subsequent stages may be processed as for the DFT-s-OFDM waveform generation described above.

The required IFFT transform size applied at 404 may be determined as a ratio of output sample rate and subcarrier spacing (SCS) as $N = F_S/f_{SCS}$. For example, for supporting 200 MHz (aggregated) carrier ($F_S = 245.76$ Msps sample rate) with $f_{SCS} = 30$ kHz SCS, an IFFT of size $N = 8192$ is needed.

The DFT size may be restricted to be L = $L_1 \times L_2 \times L_3$, where $L_1 = 2^p$, $L_2 = 3^q$, and $L_3 = 5^r$. Here $p$, $q$, and $r$ are non-negative integers. When using a prime-factor algorithm for realizing the DFTs, the actual transform sizes to be implemented are $L_1$, $L_2$, and $L_3$. As $L < N$, the maximum power-of-two transform size $L_1$ is always smaller than $N$ and, therefore, the DFT can be realized using existing power-of-two transform sizes (e.g. smaller than or equal to 4096).

In some future, e.g., sixth-generation (6G) developments, wider CBWs may be defined. A wider CBW may allow for increased throughput. To implement such wider CBW, the required IFFT sizes may also increase. For example, up to 400 MHz CBW, 16384 IFFT size for 30 kHz SCS and 8192 IFFT size for 60 kHz SCS may be required. Extending beyond 400 MHz, for example towards 500 MHz, may not be easily achieved by scaling the NR numerology, because when using single IFFT (e.g., 16384 or 32768) either the IFFT utilization or BW utilization (or both) may be compromised.

In other words, increasing the CBW may mean that the required IFFT/FFT and/or DFT/IDFT sizes increase above the existing maximum transform sizes needed to support 5G-NR carriers, e.g., larger than 4096.

Therefore, alternative ways for implementing FFTs/IFFTs and/or DFTs/IDFTs longer than existing sizes (e.g. 4096) using existing IFFTs as building blocks may be beneficial. These alternative ways of realizing long transform sizes may also be beneficial for generating future (e.g., sixth-generation) carrier types, as the transmission bandwidths may increase beyond the 100 MHz bandwidth currently supported by the 5G-NR maximum transform size and standardized subcarrier spacings.

Some examples of the present disclosure provide example implementations for generating wide (e.g., CBW > 100 MHz) OFDM and DFT-s-OFDM waveforms. Some examples may use existing transform sizes with additional processing. Some examples may provide transparent waveform processing with respect to conventional OFDM/DFT-s-OFDM approaches. The spectral containment for the waveforms generated using the proposed approach may be enhanced when compared with some conventional schemes.

Some examples may help enable efficient implementation of large IFFT sizes. Some examples may enable increasing the maximum CBW without the need to follow single IFFT power-of-two scaling rule. Some examples may enable more flexible channel bandwidth configurations e.g., 500 MHz CBW.

Some examples may help enable improved energy efficiency for transmitter and/or receiver, in the cases when only part of the carrier bandwidth needs to be processed. For example, if UE supporting 400 MHz CBW is expected to operate with 100 MHz transmission or reception bandwidth, it may want to reduce the FFT/IFFT bandwidth (e.g. from 16384 to 4096). This can be achieved by decomposed OFDM and DFT-s-OFDM waveform generation. In some examples, different combinations transform block sizes may be used to achieve the overall same bandwidth. For example, FFT/IFFT may be implemented using 2x4096 or 4x2048 block sizes to support the same transmission bandwidth. In some cases, the different implementations may have different energy saving capabilities. The selection of transform block combination may be implementation specific.

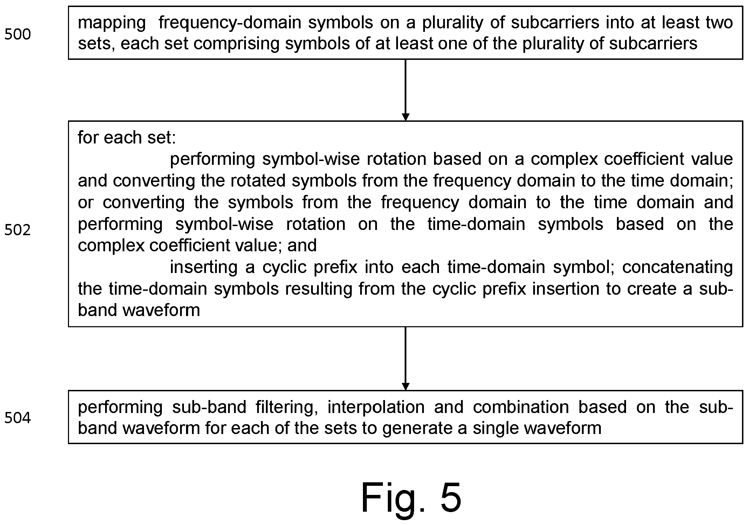

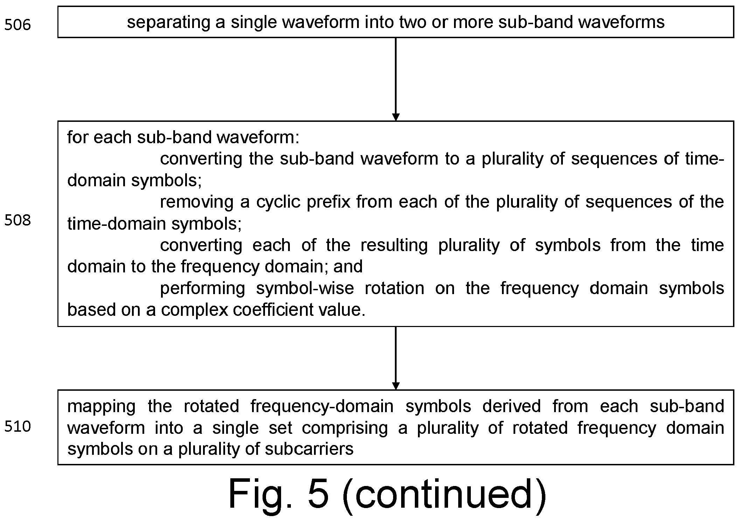

Reference is made to Figure 5, which shows methods according to some examples.

At 500, a method comprises mapping frequency-domain symbols on a plurality of subcarriers into at least two sets, each set comprising symbols of at least one of the plurality of subcarriers.

At 502, the method comprises, for each set:

performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value; and inserting a cyclic prefix into each time-domain symbol; concatenating the time-domain symbols resulting from the cyclic prefix insertion to create a sub-band waveform.

At 504, the method comprises performing sub-band filtering, interpolation and combination based on the sub-band waveform for each of the sets to generate a single waveform.

At 506, a method comprises separating a single waveform into two or more sub-band waveforms.

At 508, the method comprises; for each sub-band waveform:

converting the sub-band waveform to a plurality of sequences of time-domain symbols; removing a cyclic prefix from each of the plurality of sequences of the time-domain symbols; converting each of the resulting plurality of symbols from the time domain to the frequency domain; and performing symbol-wise rotation on the frequency domain symbols based on a complex coefficient value.

At 510, the method comprises mapping the rotated frequency-domain symbols derived from each sub-band waveform into a single set comprising a plurality of rotated frequency domain symbols on a plurality of subcarriers.

Some examples provide implementations for efficient decomposed realization of large transform sizes, e.g., by using multiple existing transform sizes. Different implementations may be applied to different scenarios (e.g., for UE side, or BS side).

Some examples may implement decomposed OFDM and DFT-s-OFDM waveform generation. Some examples may be used for generating wide carriers in 5G advanced or 6G developments, or indeed any other future developments. Some examples may provide particular benefits for transmissions with number of subcarriers larger than current maximum sizes, such as the current maximum size supported by 5G-NR - for example 3300 or 4096. Furthermore, while some examples are depicted for the scenario where number of subcarriers is larger than that of supported by 4096 FFT (which is the FFT size assumed in NR), some examples may be applied for other scenarios, e.g. for increasing the number of subcarriers beyond that of supported by 4096 FFT, e.g., in the possible future scenarios designed according to 8192 FFT (per component carrier).

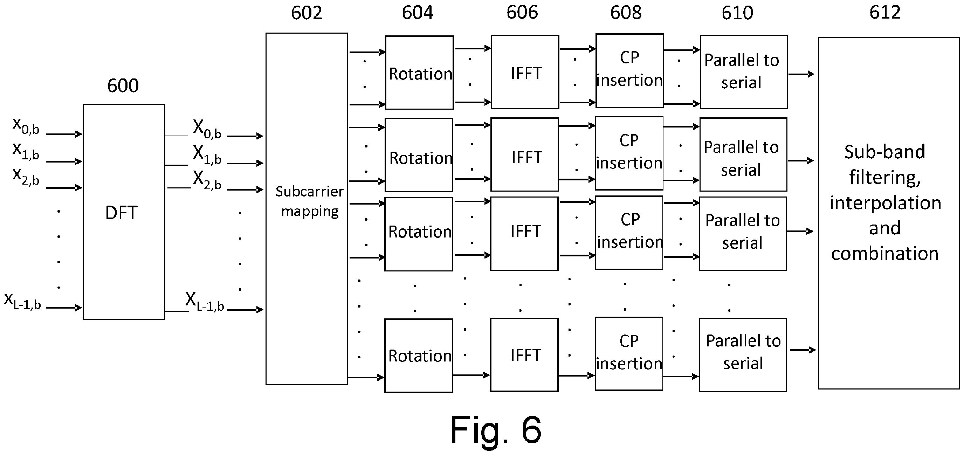

Reference is made to Figure 6, which shows a block diagram for OFDM or DFT-s-OFDM waveform generation according to some examples.

At 600, a DFT of size $L$ may be performed on symbols on $L$ active subcarriers. In some examples, $L > 3300$. For OFDM waveforms, this step may be omitted.

At 602, sub-carrier mapping may be performed. Frequency domain bins for symbols on L active subcarriers may be mapped into $M \geq 2$ (two or more) sets.

At 604, symbol-wise rotation may be performed for each bin of the $M$ sets. Each bin in the sets may be multiplied by complex coefficient value. The resulting rotated symbols may then be mapped into the input bins of the IFFT.

At 606, IFFT may be performed separately for each set. Thus, $M$ IFFTs may be performed. The IFFT may have size $N/M$.

In some examples, step 604 may be performed before step 606, as shown in Figure 6. However, in other examples step 606 may be performed before step 604. That is to say, in some examples an IFFT may be performed based on the output of step 602, and then the symbols resulting from the IFFT may be rotated, before adding the cyclic prefix to the rotated time-domain symbols at 608.

At 608, a cyclic prefix (CP) may be inserted into each symbol resulting from the IFFT. The CP may have size $N_{CP,b}/M$.

At 610, parallel to serial conversion may be performed. For example, the symbols may be concatenated to form sub-band waveforms.

At 612, interpolation, modulation and combining of the sub-band waveforms from each set may be performed. The interpolation factor may, for example, be integer greater than one, such as two. The sub-band waveforms may be interpolated using interpolation filtering. As a result of step 612, the resulting waveform may be contiguous in frequency.

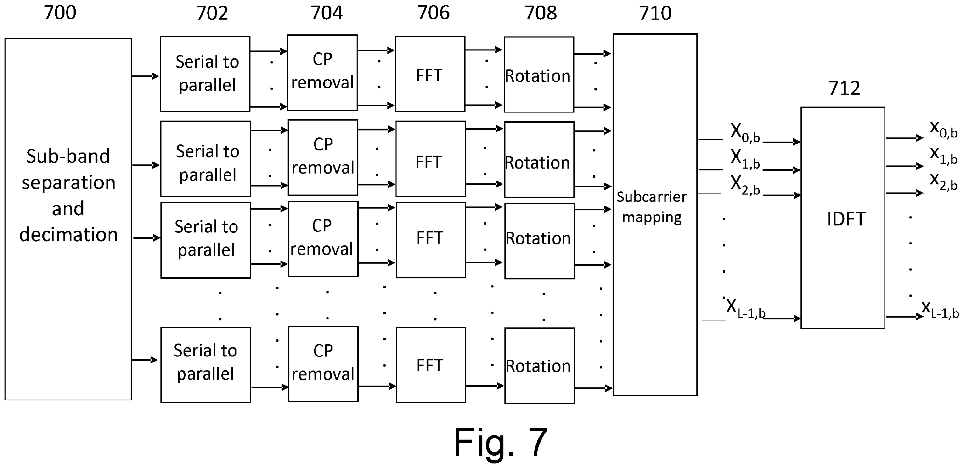

In some examples, a reverse process to that described above in relation to Figure 6 may be implemented at the receiver-side to obtain the symbols on the $L$ active subcarriers. An example of this is described below with reference to Figure 7.

At 700 the waveform may be demodulated and decimated by the same factor used in the modulation. For example, the waveform may be demodulated (e.g. frequency shifted) and decimated by factor of two using decimation filtering to separate the sub-band waveforms.

At 702, the separated sub-band waveforms may be converted from serial to parallel.

At 704, CP removal may be performed. For example, a CP of length $N_{CP,b}/M$ may be removed from each of the symbols.

At 706, for each set a separate fast Fourier transform (FFT) may be performed. Thus in some examples $M$ FFTs may be performed. Each FFT may have size $N/M$.

At 708, symbol-wise (de)rotation may be performed for each bin of the $M$ sets. For example, each bin may be multiplied by complex coefficient value.

At 710, the rotated frequency-domain bins may be mapped into the input bins of an IDFT of size L.

At 712, an inverse discrete Fourier transform (IDFT) may be performed on the rotated frequency domain bins to obtain the symbols on the $L$ active subcarriers. In examples where the waveform is an OFDM waveform and not a DFT-s-OFDM waveform, step 712 may be omitted.

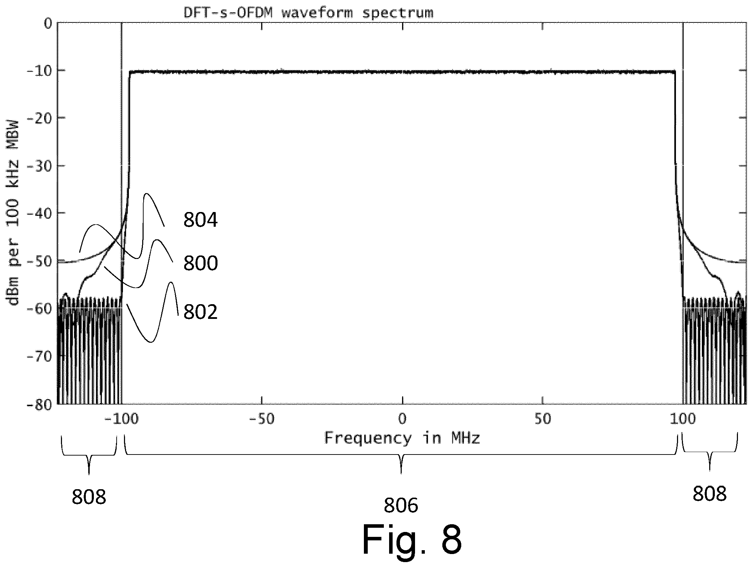

Figure 8 shows the power spectral density (PSD) of a DFT-s-OFDM waveform realized using decomposed processing as described above in relation to Figures 6 and 7. In the example of Figure 8, $L = L_1 \times L_2 \times L_3 = 6480$ with $L_1 = 2^4$, $L_2 = 3^4$, and $L_3 = 5^1$ and $N = 2 \times 4096$. The interpolation and combining (e.g. at step 612) in this example is realized using time-domain processing.

Figure 8 shows the results for two designs using the proposed approach. For the first design 800, an interpolation filter of length $P = 27$ with only 7 non-trivial multipliers is used. For the second design 802, filter of length $P = 163$ with 41 non-trivial multipliers is used. For comparison, the results for a conventional DFT-s-OFDM 804 are also shown.

As seen from this figure, within the channel bandwidth 806 the PSD of all approaches is reasonably consistent. However, at the edge of the channel bandwidth, for example in regions 808 either side of the channel bandwidth 806, it can be seen that the first design with decomposed processing has considerably lower spectral leakage when compared to conventional approach. This is indicated by the faster drop-off of the PSD from the edge of the channel bandwidth down to a value below -50 dBm per 100 kHz measurement bandwidth (MBW), while the convention approach has a slower drop-off of the PSD to a value of -50 dBm per 100 kHz MBW.

Furthermore, it can be seen that by increasing the filter order, as in second design, the spectral localization can be further improved. This is indicated by the faster drop-off of the PSD from the edge of the channel bandwidth down to a value of -60 to -80 dBm per 100 kHz MBW.

In some examples, the interpolation and combination may be carried out in the time domain. In some examples, the interpolation and combination may be carried out in the frequency domain. In some examples, the interpolation and combination may be carried out in the time domain, and additional frequency-domain filtering may be applied before the interpolation.

In the following, examples are described in the context of OFDM waveform generation. In some examples, the corresponding DFT-s-OFDM waveform generation can be realized by introducing DFT spreading/precoding before the OFDM waveform generation, for example as depicted in step 400 in Figure 4 described previously. Some examples may be implemented at or by a UE and/or a base station.

Time-domain interpolation and combination

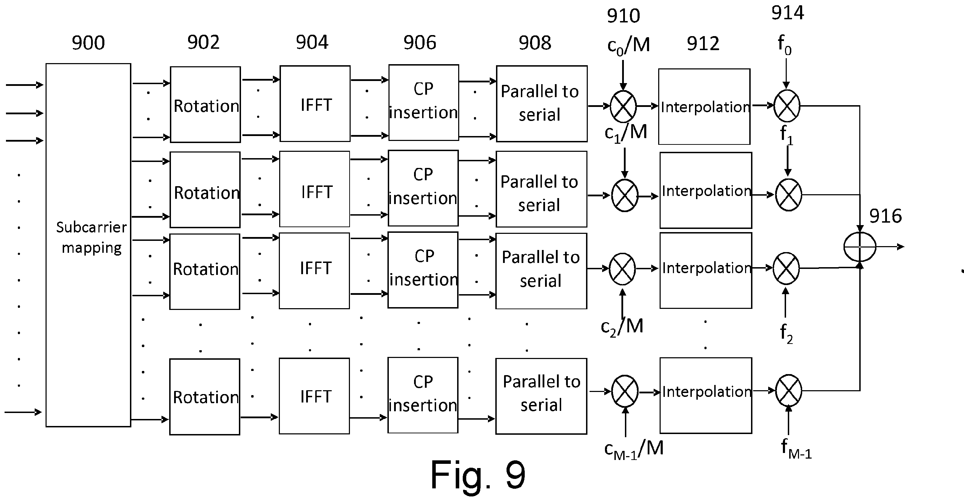

Reference is made to Figure 9, which shows a block diagram of an example for OFDM waveform generation according to some examples using time-domain interpolation and combination.

At 900, sub-carrier mapping is performed. Frequency-domain bins for symbols on L active subcarriers may be mapped into two or more sets.

For example, as shown in Figure 9, $X_{\ell,b}$ for $\ell = 0,1, ..., L - 1$ may identify the symbols (e.g. BPSK/QPSK/QAM symbols) on $L$ active subcarriers for the bth multicarrier symbol. The symbols $X_{\ell,b}$ may be divided into $M$ sets. For example, a first set may contain symbols $X_{\ell,b}$ for $\ell = 0,1, ..., L/M - 1$, second set may contain symbols $X_{\ell,b}$ for $\ell = L/M, L/M + 1, ..., 2L/M - 1$ and so on.

At 902, symbol-wise rotation may be performed for each bin of the $M$ sets.

For example, the symbols in the $m$th set for $m = 0,1, ..., M - 1$ may be multiplied by complex coefficient value. For complex coefficient value may for example be:

$$\phi_{m,b} = exp\left(-2j\pi\theta_{m,b}\right)$$

In some examples

$$\theta_{m,b} = \frac{L}{M}\left(\frac{M-1}{2} - m\right)\sum_{k=0}^{b} N_{CP,k}.$$

At 904, each set of rotated symbols may be input into an inverse fast Fourier transform (IFFT) and IFFT performed for each set of symbols. The size of the IFFT may be $N/M$. In total, $M$ IFFTs of size $N/M$ may be performed.

At 906, for each set a cyclic prefix is added to the output of the IFFT. The CP may have a length $N_{CP,b}/M$.

At 908 the resulting symbols in each set are converted from parallel to serial, e.g. by concatenation. This may result in, for each set, a sub-band waveform.

At 910, for each set the sub-band waveform may be modulated to a first frequency. The first frequency may be $c_m/M$. The parameter $c_m$ is discussed in further detail below.

At 912, interpolation may be performed on the modulated sub-band waveforms. The interpolation may be by factor of $I \geq M$. For example, the resulting sub-waveforms may be upsampled by $I$ by inserting $I - 1$ zeros between the samples and then filtering out the resulting spectral images from the upsampled waveform.

In some examples, at step 912, when $I$ is factorizable into $I = I_1 I_2$, the interpolation may be carried out in two stages. A first stage may comprise up-sampling the result of step 610 by factor of $I_1$ and filtering by a first subfilter. A second stage may comprise up-sampling the result of the first stage by factor of $I_2$ and filtering by a second sub-filter. In general, in some examples when $I$ is factorizable into $S$ stages as $I = I_1 I_2 \cdots I_S$, the interpolation may be carried out in $S$ steps. In some examples, $I = M$. However, in other examples $I \neq M$, and when $M$ is not a power-of-two value, $I$ may be selected, e.g., as

$$I = 2^{\lceil \log_2(M) \rceil}.$$

At 914, the interpolated waveforms may be modulated to a second frequency. The second frequency may be $f_m = f_{SCS} L/M[(M - 1)/2 - m] - c_m$.

At 916 the interpolated and modulated waveforms for each set may be combined into a single OFDM waveform.

In some examples, when performing the interpolation by factor of two with numerically efficient interpolators, increasing the filter order may not improve the spectral localization. This may be due to fact that normalized passband and stopband filter edges may be related as $\omega_s = 1 - \omega_p$ and, therefore, the normalized stopband filter edge may be greater than 0.5.

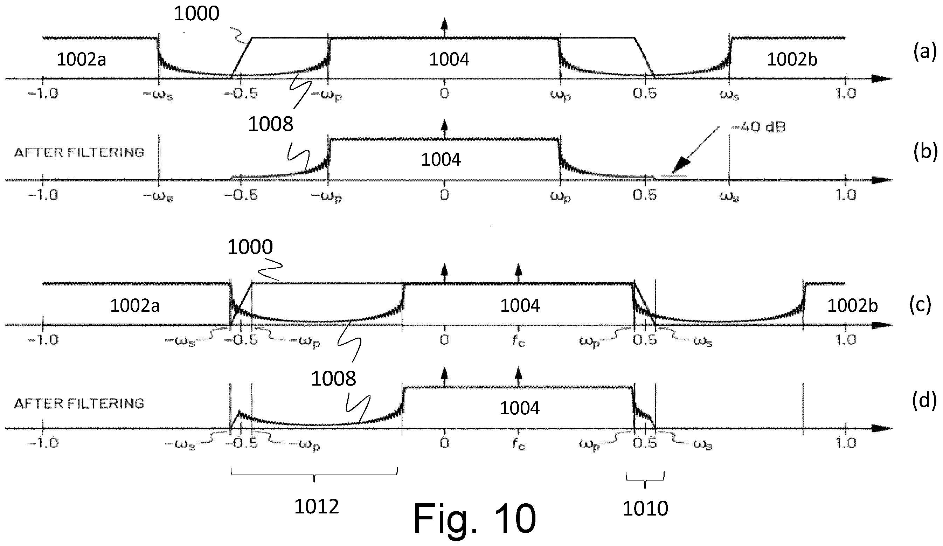

An example of this is shown in Figure 10(a) and 10(b), which shows a sub-band waveform located between $\omega_p$ and $-\omega_p$. In the example of Figure 10(a), the parameter $c_m = 0$ and the minimum normalized stopband filter edge is greater than 0.5.

In some examples, the value of $c_m$ may be determined iteratively, e.g. numerical optimization. In other examples a value for $c_m$ can be defined based on the PSD of the waveform and the spectral characteristic of the filter. The PSD of the waveform may be determined by L and N, and the filter magnitude response may be determined by the filter order and passband (or stopband) edge. Both responses can be defined analytically and the analytical value for $c_m$ can be derived. In some examples, by adjusting the value of $c_m$, the spectrum of the waveform can be controlled according to the implementation - for example some parts of the spectrum can be enhanced or suppressed as required based on the attenuation requirements. In some examples, a normalized frequency ($c_0/(Fs/2)$) may have a value between 0 and 0.5, where Fs is interpolated sample rate (e.g., the sample rate at the filter output).

However, by performing the modulation at step 910, the rightmost and leftmost sub-band waveforms may be frequency shifted to the right and left edges of the filter passband region respectively. As a result, narrow transition bands can be realized at the cost of additional modulation.

In the example of Figure 10(c) and 10(d), the parameter $c_m \neq 0$, and the sub-band is shifted towards the right edge of the filter passband. As shown in Figure 10(c) and 10(d), the resulting sub-band has a center frequency of $f_c$, rather than a center frequency of 0 as shown in Figure 10(a) and 10(b). As a result, a reduced spectral leakage for the filtered subband waveform is achieved. In some examples the frequency shifting of the sub-band waveform may be compensated for in step 914.

In Figure 10, an example filter response is shown at 1000. Figures 10(a) and 10(c) show examples of the spectrum after the upsampling and before filtering, and Figures 10(b) and 10(d) show examples of the spectrum after the filter is applied.

In general, the interpolation can be carried out in two steps:

> 1) upsampling (inserting the zeros between the original samples, which may generate a spectral image of the original spectrum. Figures 10(a) and 10(c) show examples of this where half of the spectral image is located on the left-hand side of the subband waveform 1004 at 1002a and half is located on the right hand side of the subband waveform 1004 at 1002b); and

> 2) filtering the result to remove the excess spectral images, where the resulting waveforms and PSD are shown in Figures 10(b) and 10(d).

In some implementations these steps may be simultaneous and not carried out separately. While the "ideal" spectrum produced by the filtering may have a box-like shape, in practice this may not be achievable. Instead, the measured PSD may follow a pattern similar to that shown by line 1008.

In some examples, the normalized minimum stopband edge frequency of the filter may be limited to +/- 0.5. As such, when the filter is applied to try and remove the extra spectral image, there may be some relatively high spectral side-lobes in the ranges $[-0.5, -\omega_p]$ and $[\omega_p, 0.5]$, as shown in Fig. 10(b).

Figures 10(c) and 10(d) show an example where the subband waveform is shifted to the right prior to the filtering, where Figure 10(c) shows the shifted spectrum after upsampling and Figure 10(d) shows the shifted and filtered spectrum.

As shown in Figure 10(d), a narrow part of the original spectral side-lobes, indicated by 1010, is present on the right-hand side of the subband waveform. On the left-hand side of the subband waveform, while there may be a larger side-lobes, indicated by 1012, in practice another subband waveform may be aligned on the top of side-lobes 1012 (after the similar shifting into opposite direction), and so the better spectral confinement on the right-hand side of the subband waveform may be achieved with little to no impact elsewhere in the spectrum.

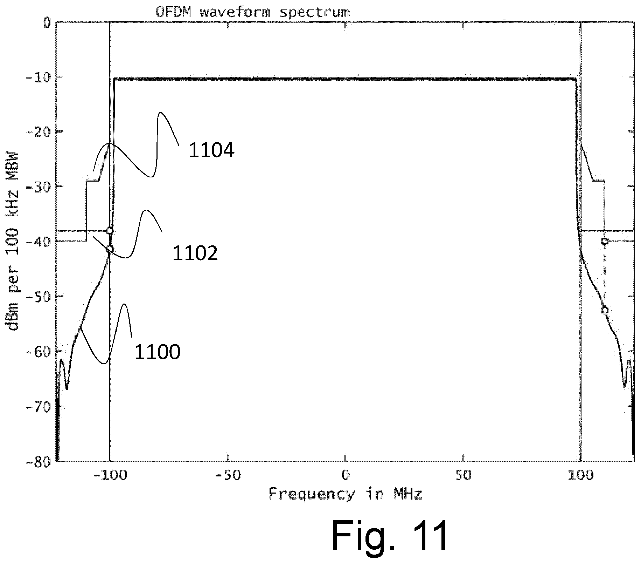

Figure 11 shows an example PSD of an OFDM waveform, where 1100 shows the PSD achieved using decomposed processing as described above in relation to Figure 9, and 1102 and 1104 show -some illustrative spectral emission masks for comparison. As can be seen, by applying the processing described above in relation to Figure 9, the spectral localization can be improved, as indicated by the faster drop-off of the PSD from the edge of the channel bandwidth down to a value of -80 dBm per 100 kHz MBW at the edges of the Figure.

Frequency domain interpolation and combination

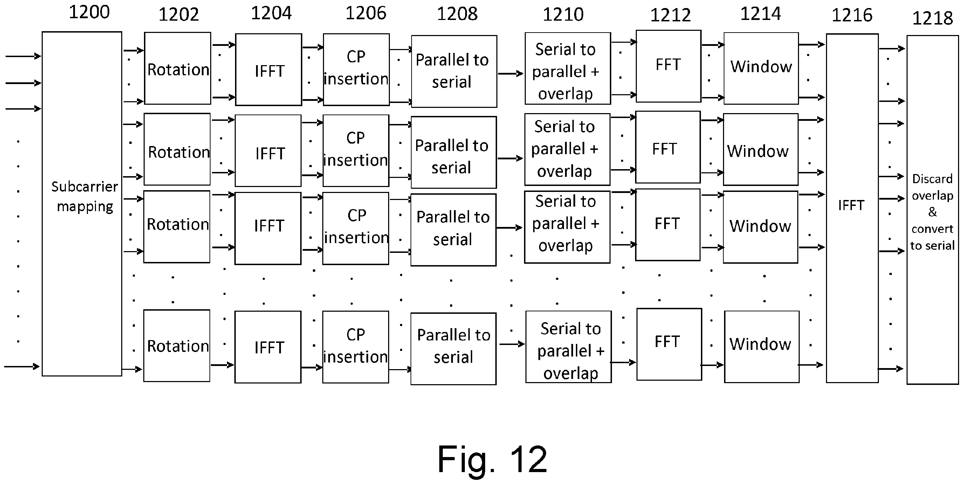

Reference is made to Figure 12, which shows a block diagram of an example for OFDM waveform generation according to some examples using frequency domain interpolation and combination. Blocks 1200-1208 may be similar to blocks 900-908 described previously.

At 1200, sub-carrier mapping is performed. Frequency domain bins for symbols on L active subcarriers may be mapped into two or more sets.

For example, as shown in Figure 12, $X_{\ell,b}$ for $\ell = 0,1, ..., L - 1$ may identify the symbols (e.g. BPSK/QPSK/QAM symbols) on $L$ active subcarriers for the bth multicarrier symbol. The symbols $X_{\ell,b}$ may be divided into $M$ sets. For example, a first set may contain symbols $X_{\ell,b}$ for $\ell = 0,1, ..., L/M - 1$, second set may contain symbols $X_{\ell,b}$ for $\ell = L/M, L/M + 1, ...,2L/M - 1$ and so on.

At 1202, symbol-wise rotation may be performed for each bin of the $M$ sets.

For example, the symbols in the $m$th set for $m = 0,1, ..., M - 1$ may be multiplied by complex coefficient value. For complex coefficient value may for example be:

$$\phi_{m,b} = exp\left(-2j\pi\theta_{m,b}\right)$$

In some examples

$$\theta_{m,b} = \frac{L}{M}\left(\frac{M-1}{2} - m\right)\sum_{k=0}^{b} N_{CP,k}.$$

At 1204, each set of rotated symbols may be input into an inverse fast Fourier transform (IFFT) and IFFT performed for each set of symbols. The size of the IFFT may be $N/M$. In total, $M$ IFFTs of size $N/M$ may be performed.

At 1206, for each set a cyclic prefix is added to the output of the IFFT. The CP may have a length $N_{CP,b}/M$.

At 1208 the resulting symbols in each set are converted from parallel to serial, e.g. by concatenation. This may result in, for each set, a sub-band waveform.

At 1210, for each set the sub-band waveform may be segmented into overlapping blocks of length P. The overlap between the blocks may be $P_O < P$ samples.

At 1212, for each set the overlapping blocks may be converted into the frequency domain. For example, a FFT of length P may be applied to the overlapping blocks.

At 1214, the frequency-domain representations of the overlapped blocks of each sub-band may be "windowed" or filtered by applying a frequency-domain window function (e.g. a bandpass filter).

At 1216, for each set the windowed frequency-domain representation may be converted back to the time domain. For example, the windowed frequency-domain representations may be mapped to the input of the IFFT and IFFT performed. The IFFT may have size of size $Q = MP$.

At 1218, a subset of the samples from the resulting time-domain blocks may be discarded. For example, $Q_O = P_O M$ samples may be discarded. The resulting segments may then be combined into a single waveform, e.g. by concatenation.

In some examples, the block length P and overlap $P_O$ can be arbitrarily chosen. Increasing the block length and the overlap may increase the performance (selectivity).

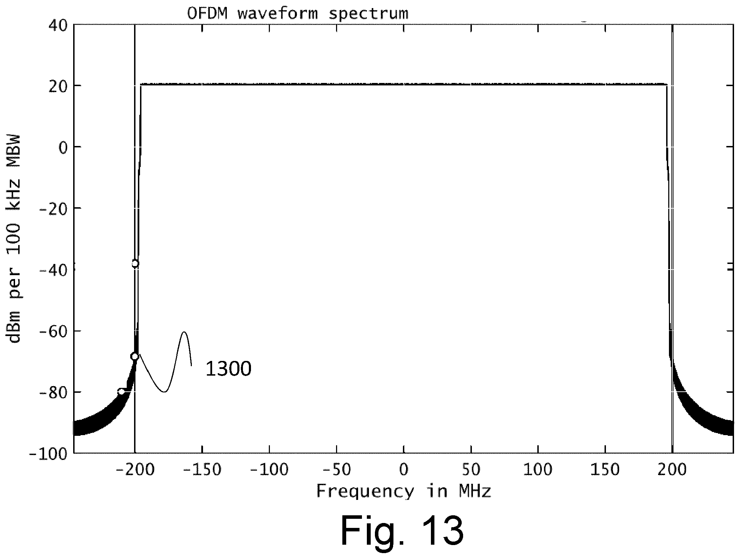

Figure 13 shows an example PSD of an OFDM waveform, where 1300 shows the PSD achieved using decomposed processing as described above in relation to Figure 12. As can be seen, by applying the processing described above in relation to Figure 12, the spectral localization can be improved, as indicated by the faster drop-off of the PSD from the edge of the channel bandwidth down to a value of around -90 dBm per 100 kHz MBW at the edges of the Figure. When compared to the PSD shown in Figure 11, this represents a further improvement in the spectral localization.

Time domain interpolation and combination with additional frequency domain filtering

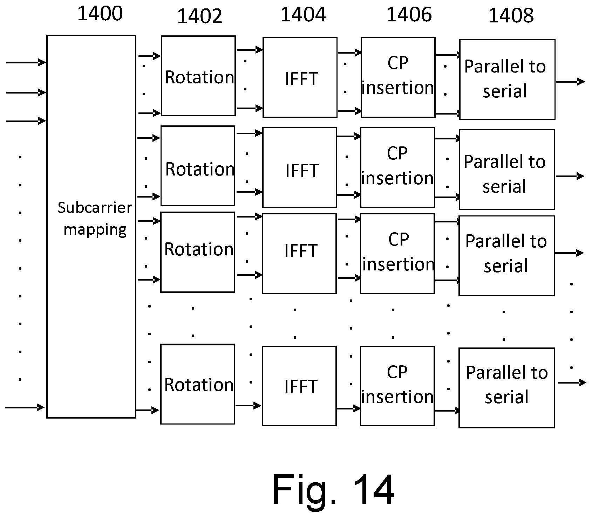

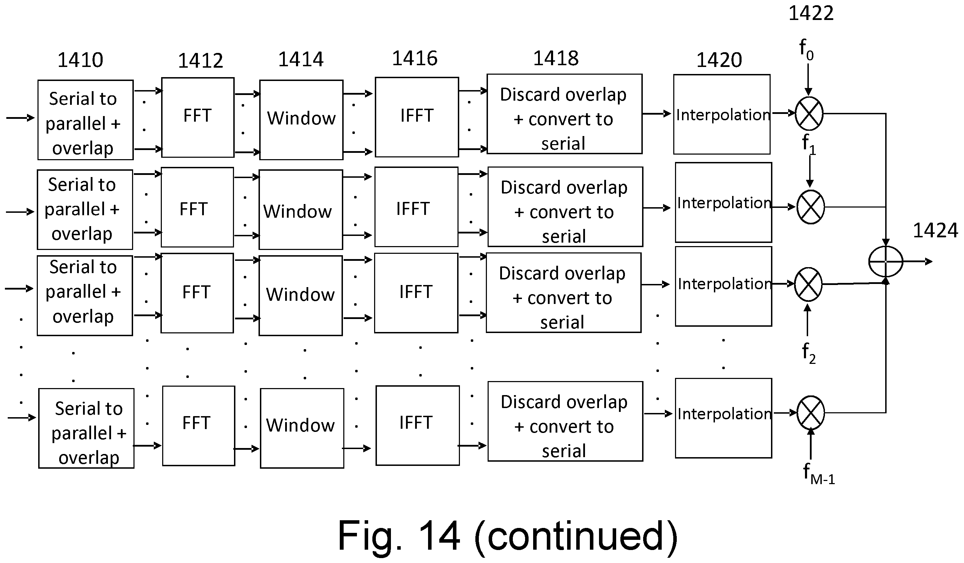

Reference is made to Figure 14, which shows a block diagram of an example for OFDM waveform generation according to some examples using time domain interpolation and combination with additional frequency domain filtering. Blocks 1400-1408 may be similar to blocks 900-908 and 1200-1208 described previously.

At 1400, sub-carrier mapping is performed. Frequency domain bins for symbols on L active subcarriers may be mapped into two or more sets.

For example, as shown in Figure 14, $X_{\ell,b}$ for $\ell = 0,1, ..., L - 1$ may identify the symbols (e.g. BPSK/QPSK/QAM symbols) on $L$ active subcarriers for the bth multicarrier symbol. The symbols $X_{\ell,b}$ may be divided into $M$ sets. For example, a first set may contain symbols $X_{\ell,b}$ for $\ell = 0,1, ..., L/M - 1$, second set may contain symbols $X_{\ell,b}$ for $\ell = L/M, L/M + 1, ...,2L/M - 1$ and so on.

At 1402, symbol-wise rotation may be performed for each bin of the $M$ sets.

For example, the symbols in the $m$th set for $m = 0,1, ..., M - 1$ may be multiplied by complex coefficient value. For complex coefficient value may for example be:

$$\phi_{m,b} = exp\left(-2j\pi\theta_{m,b}\right)$$

In some examples

$$\theta_{m,b} = \frac{L}{M}\left(\frac{M-1}{2}-m\right)\sum_{k=0}^{b} N_{CP,k} .$$

At 1404, each set of rotated symbols may be input into an inverse fast Fourier transform (IFFT) and IFFT performed for each set of symbols. The size of the IFFT may be $N/M$. In total, $M$ IFFTs of size $N/M$ may be performed.

At 1406, for each set a cyclic prefix is added to the output of the IFFT. The CP may have a length $N_{CP,b}/M$.

At 1408 the resulting symbols in each set are converted from parallel to serial, e.g. by concatenation. This may result in, for each set, a CP-OFDM sub-band waveform.

At 1410, for each set the sub-band waveform may be converted from serial to parallel. In some examples, there may be an overlap. For example, each set may have a block length of Q and overlap of $Q_O$.

At 1412, for each set the overlapping blocks may be converted into the frequency domain. This may for example be performed by applying a FFT of size $Q$ to the overlapping blocks.

At 1414, the frequency-domain representations of the overlapped blocks of each sub-band may be windowed by applying a frequency domain window function.

At 1416, for each set the windowed frequency-domain blocks may be converted back to the time domain. This may for example be performed by applying an IFFT of size Q to the windowed frequency-domain blocks.

At 1418, for each set the overlap from the overlapped time-domain blocks may be removed and the resulting parallel segments converted to serial, for example by concatenation.

At 1420, for each set the resulting sub-band waveforms may be interpolated by factor of $I \geq M$. For example, the sub-band waveforms may be upsampled by $I$ by inserting $I - 1$ zeros between the samples and then filtering out the resulting spectral images from the upsampled waveform.

At 1422, for each set the interpolated waveforms may be modulated to center frequencies. For example, the interpolated waveforms may be modulated to center frequencies of $f_m = f_{SCS}L/M[(M - 1)/2 - m]$.

At 1424, the interpolated and modulated waveforms from each set may be combined into an OFDM waveform.

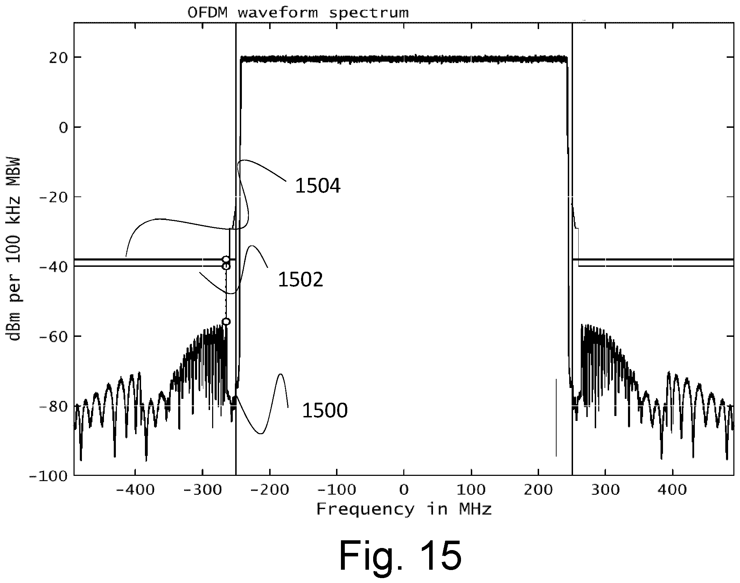

Figure 15 shows an example PSD of an OFDM waveform, where 1500 shows the PSD achieved using decomposed processing as described above in relation to Figure 14, and 1502 and 1504 some illustrative spectral emission masks for comparison. As can be seen, by applying the processing described above in relation to Figure 14, the spectral localization can be improved, as indicated by the faster drop-off of the PSD from the edge of the channel bandwidth down to a value of around -60 to -90 dBm per 100 kHz MBW towards the edges of the Figure. Thus, improved spectral localization may be achieved.

While examples have been described above with respect to the generation of a single waveform for transmission, it should be understood that in some examples the inverse process may be performed at the receiver side to (re)generate the plurality of symbols on the subcarriers. An example of an inverse process is shown and described above in relation to Figure 7, and further inverse processes based on Figures 9, 12 and 14 are also possible and within the scope of the present disclosure.

For example, with respect to the inverse process of Figure 9, the sub-band separation and decimation (e.g. separating the waveform into two or more sub-band waveforms) may comprise, for each sub-band waveform: demodulating the sub-band waveform from a second frequency, decimating the demodulated sub-band waveform, and demodulating the decimated demodulated sub-band waveform from a first frequency, and converting the resulting sub-band waveform to a plurality of sequences of time-domain symbols. The first and second frequencies may be as previously described.

For example, with respect to the inverse process of Figure 12, the sub-band separation and decimation (e.g. separating the waveform into two or more sub-band waveforms) may comprise: segmenting the single waveform into a plurality of partially overlapping blocks comprising one or more time-domain symbols; converting each partially overlapping block of time-domain symbols to the frequency domain; segmenting the resulting frequency-domain symbols into a plurality of partially overlapping sets of frequency domain symbols; and for each set: applying a window function to the set of frequency-domain symbols; converting the windowed set of frequency-domain symbols to the time-domain; removing overlapping parts from each of the partially overlapping sets of time-domain symbols and combining the resulting symbols into a sub-band waveform.

For example, with respect to the inverse process of Figure 14, the sub-band separation and decimation (e.g. separating the waveform into two or more sub-band waveforms) may comprise, for each sub-band waveform: demodulating the sub-band waveform from a third frequency; decimating the demodulated sub-band waveform; separating the decimated demodulated sub-band waveform into a plurality of partially overlapping blocks of symbols, wherein each block of symbols overlaps at least partially with at least one other block of symbols; and for each block: converting the block of partially overlapping symbols to the frequency-domain; applying a window function to the frequency-domain block of partially overlapping symbols; converting the resulting frequency-domain block of partially overlapping symbols to the time domain; and removing the overlapping symbols from each of the time-domain blocks of partially overlapping symbols and combining the resulting symbols into a sub-band waveform.

Some examples may enable efficient implementation of large transforms (e.g. FFT/IFFT, DFT/IDFT) in a transparent way, e.g., there may be little or no impact on receiver side (because the transmitted waveform is not changed). Some examples can be implemented with current transforms already existing in the devices. Some examples may therefore avoid increasing the circuit area. Some examples may provide improved spectral localization when compared to conventional waveform generation. Some examples may enable increasing the number of supported subcarriers and thus new bandwidth/numerology options with existing transform sizes, e.g., even without increasing the maximum transform size.

In some examples there is provided an apparatus comprising means for mapping frequency-domain symbols on a plurality of subcarriers into at least two sets, each set comprising symbols of at least one of the plurality of subcarriers; for each set: performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value; inserting a cyclic prefix into each time-domain symbol; concatenating the time-domain symbols resulting from the cyclic prefix insertion to create a sub-band waveform; and performing sub-band filtering, interpolation and combination based on the sub-band waveform for each of the sets to generate a single waveform.

In some examples there is provided an apparatus comprising means for: separating a single waveform into two or more sub-band waveforms; for each sub-band waveform: converting the sub-band waveform to a plurality of sequences of time-domain symbols; removing a cyclic prefix from each of the plurality of sequences of the time-domain symbols; converting each of the resulting plurality of symbols from the time domain to the frequency domain; performing symbol-wise rotation on the frequency domain symbols based on a complex coefficient value; and mapping the rotated frequency-domain symbols derived from each sub-band waveform into a single set comprising a plurality of rotated frequency domain symbols on a plurality of subcarriers.

In some examples there is provided an apparatus comprising at least one processor and at least one memory storing instructions that, when executed by the at least one processor, cause the apparatus at least to: map frequency-domain symbols on a plurality of subcarriers into at least two sets, each set comprising symbols of at least one of the plurality of subcarriers; for each set: perform symbol-wise rotation based on a complex coefficient value and convert the rotated symbols from the frequency domain to the time domain; or convert the symbols from the frequency domain to the time domain and perform symbol-wise rotation on the time-domain symbols based on the complex coefficient value; insert a cyclic prefix into each time-domain symbol; concatenate the time-domain symbols resulting from the cyclic prefix insertion to create a sub-band waveform; and perform sub-band filtering, interpolation and combination based on the sub-band waveform for each of the sets to generate a single waveform.

In some examples there is provided an apparatus comprising at least one processor and at least one memory storing instructions that, when executed by the at least one processor, cause the apparatus at least to: separate a single waveform into two or more sub-band waveforms; for each sub-band waveform: convert the sub-band waveform to a plurality of sequences of time-domain symbols; remove a cyclic prefix from each of the plurality of sequences of the time-domain symbols; convert each of the resulting plurality of symbols from the time domain to the frequency domain; perform symbol-wise rotation on the frequency domain symbols based on a complex coefficient value; and map the rotated frequency-domain symbols derived from each sub-band waveform into a single set comprising a plurality of rotated frequency domain symbols on a plurality of subcarriers.

It is understood that references in the above to various network functions (e.g., to an AMF, an SMF, etc.) may comprise apparatus that perform at least some of the functionality associated with those network functions. Further, an apparatus comprising a network function may comprise a virtual network function instance of that network function.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

**Claims**

1. An apparatus comprising means for:

   mapping frequency-domain symbols on a plurality of subcarriers into at least two sets, each set comprising symbols of at least one of the plurality of subcarriers;
   for each set:

   performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value;
   inserting a cyclic prefix into each time-domain symbol;
   concatenating the time-domain symbols resulting from the cyclic prefix insertion to create a sub-band waveform; and

   performing sub-band filtering, interpolation and combination based on the sub-band waveform for each of the sets to generate a single waveform.

2. The apparatus of claim 1, wherein the two or more sets comprises one or more active sets and one or more inactive sets, wherein the one or more active sets contain mapped frequency-domain symbols and wherein the one or more inactive sets do not contain mapped frequency domain symbols.

3. The apparatus of claim 1 or 2, wherein converting the rotated symbols from the frequency domain to the time domain comprises applying an inverse fast Fourier transform to each of the rotated symbols.

4. The apparatus of any preceding claim, wherein the complex coefficient value is $\phi_{m,b} = exp(-2j\pi\theta_{m,b})$, where:

$$\theta_{m,b} = \frac{L}{M}\left(\frac{M-1}{2} - m\right)\sum_{k=0}^{b} N_{CP,k}$$

$L$ is the number of subcarriers,
$M$ is the number of sets,
$b$ is an index of the symbol,
$m$ is an index of the set, and is an integer value varying between zero and $M$ - 1, and
$N_{CP,k}$ is the length of the cyclic prefix.

5. The apparatus of any preceding claim, wherein performing the sub-band filtering, interpolation and combination based on the sub-band waveforms to generate the single waveform comprises:

   for each set:

   modulating the sub-band waveform to a first frequency;
   interpolating the modulated sub-band waveform; and
   modulating the interpolated modulated sub-band waveform to a second frequency; and

   combining the resulting interpolated and modulated sub-band waveform of each set into a single waveform.

6. The apparatus of claim 5, wherein the first frequency is $c_m/M$, wherein:

   $M$ is the number of sets; and
   $c_m$ is an implementation specific parameter to control the spectrum of the sub-band waveform

7. The apparatus of claim 5 or 6, wherein the second frequency is $f_m = f_{SCS}L/M[(M-1)/2 - m] - c_m$, wherein:

   $f_{SCS}$ is a subcarrier spacing frequency of the generated waveform;
   L is the number of subcarriers,
   $M$ is the number of sets,
   $m$ is the number of the set, and is an integer value varying between zero and $M$ - 1, and
   $c_m$ is an implementation specific parameter to control the spectrum of the sub-band waveform.

8. The apparatus of any of claims 5 to 7, wherein the interpolating comprises up-sampling and filtering the modulated sub-band waveforms, wherein the up-sampling comprises inserting a number of zeros between samples of the modulated sub-band waveforms.

9. The apparatus of any of claims 1 to 4, wherein performing the sub-band filtering, interpolation and combination based on the sub-band waveforms to generate the waveform comprises:

for each set:

segmenting the symbols of the sub-band waveform into a plurality of overlapping blocks;
converting the plurality of overlapping blocks to the frequency domain;
applying a window function to each of the overlapping blocks in the frequency domain to generate a plurality of windowed blocks;
converting the plurality of windowed blocks from the frequency domain to the time domain; and
discarding a subset of each of the plurality of windowed blocks in the time domain; and

combining the resulting time domain windowed blocks of each of the sets into a single waveform.

10. The apparatus of claim 9, wherein for each set the size of overlapping blocks Po is less than the size of blocks P, and wherein the number of discarded samples Qo = PoM, wherein *M* is the number of sets.

11. The apparatus of any of claims 1 to 4, wherein performing the sub-band filtering, interpolation and combination based on the sub-band waveforms to generate the waveform comprises:

for each set:

converting the sub-band waveform from serial to parallel, wherein the resulting parallel components of the sub-band waveform are at least partially overlapping;
converting the plurality of at least partially overlapping parallel components of the sub-band waveform into the frequency domain;
applying a window function to the frequency domain parallel overlapping components of the sub-band waveform;
removing overlapping blocks from the windowed frequency domain parallel overlapping components of the sub-band waveform and converting the resulting parallel components to a serial sub-band waveform;
interpolating the serial sub-band waveform; and
modulating the interpolated serial sub-band waveform to a third frequency; and

combining the resulting modulated interpolated serial sub-band waveform of each set into a single waveform.

12. The apparatus of claim 11, wherein the third frequency is $f_m = f_{SCS}L/M[(M - 1)/2 - m]$, wherein:

$f_{SCS}$ is a subcarrier spacing frequency of the single waveform;
$L$ is the number of subcarriers,
$M$ is the number of sets, and
$m$ is the number of the set, and is an integer value varying between zero and $M$ - 1.

13. The apparatus of claim 10 or 11, wherein the interpolating comprises up-sampling and filtering the modulated sub-band waveforms, , wherein the up-sampling comprises inserting a number of zeros between samples of the modulated sub-band waveforms.

14. An apparatus comprising means for:

separating a single waveform into two or more sub-band waveforms;
for each sub-band waveform:

converting the sub-band waveform to a plurality of sequences of time-domain symbols;
removing a cyclic prefix from each of the plurality of sequences of the time-domain symbols;
converting each of the resulting plurality of symbols from the time domain to the frequency domain;
performing symbol-wise rotation on the frequency domain symbols based on a complex coefficient value; and

mapping the rotated frequency-domain symbols derived from each sub-band waveform into a single set comprising a plurality of rotated frequency domain symbols on a plurality of subcarriers.

15. A method comprising:

mapping frequency-domain symbols on a plurality of subcarriers into at least two sets, each set comprising symbols of at least one of the plurality of subcarriers;
for each set:

performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value;
inserting a cyclic prefix into each time-domain symbol;

concatenating the time-domain symbols resulting from the cyclic prefix insertion to create a sub-band waveform; and

performing sub-band filtering, interpolation and combination based on the sub-band waveform for each of the sets to generate a single waveform.

Fig. 1

Fig. 2

300

305

303

301

304

302

307 306

308

302a

302b

Fig. 3

Fig. 4

500

mapping frequency-domain symbols on a plurality of subcarriers into at least two sets, each set comprising symbols of at least one of the plurality of subcarriers

502

for each set:

       performing symbol-wise rotation based on a complex coefficient value and converting the rotated symbols from the frequency domain to the time domain; or converting the symbols from the frequency domain to the time domain and performing symbol-wise rotation on the time-domain symbols based on the complex coefficient value; and

       inserting a cyclic prefix into each time-domain symbol; concatenating the time-domain symbols resulting from the cyclic prefix insertion to create a sub-band waveform

504

performing sub-band filtering, interpolation and combination based on the sub-band waveform for each of the sets to generate a single waveform

# Fig. 5

| 506 | separating a single waveform into two or more sub-band waveforms |

| 508 | for each sub-band waveform:<br>      converting the sub-band waveform to a plurality of sequences of time-domain symbols;<br>      removing a cyclic prefix from each of the plurality of sequences of the time-domain symbols;<br>      converting each of the resulting plurality of symbols from the time domain to the frequency domain; and<br>      performing symbol-wise rotation on the frequency domain symbols based on a complex coefficient value. |

| 510 | mapping the rotated frequency-domain symbols derived from each sub-band waveform into a single set comprising a plurality of rotated frequency domain symbols on a plurality of subcarriers |

# Fig. 5 (continued)

Fig. 6

EP 4 503 526 A1

700　　　702　　　704　　　706　　　708　　　710

| Sub-band separation and decimation | Serial to parallel | CP removal | FFT | Rotation | Subcarrier mapping |

712

$X_{0,b}$
$X_{1,b}$
$X_{2,b}$

IDFT

$X_{L-1,b}$

$x_{0,b}$
$x_{1,b}$
$x_{2,b}$

$x_{L-1,b}$

Fig. 7

EP 4 503 526 A1

Fig. 8

Fig. 9

Fig. 10

EP 4 503 526 A1

Fig. 11

EP 4 503 526 A1

1200 1202 1204 1206 1208 1210 1212 1214 1216 1218

| Subcarrier mapping | Rotation | IFFT | CP insertion | Parallel to serial | Serial to parallel + overlap | FFT | Window | IFFT | Discard overlap & convert to serial |

Fig. 12

OFDM waveform spectrum

Fig. 13

Fig. 14

Fig. 14 (continued)

Fig. 15

Europäisches
Patentamt

European
Patent Office

Office européen
des brevets

# EUROPEAN SEARCH REPORT

Application Number

EP 23 18 9851

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YLI-KAAKINEN JUHA ET AL: "Frequency-Domain Signal Processing for Spectrally-Enhanced CP-OFDM Waveforms in 5G New Radio", IEEE TRANSACTIONS ON WIRELESS COMMUNICATIONS, IEEE SERVICE CENTER, PISCATAWAY, NJ, US, vol. 20, no. 10, 12 May 2021 (2021-05-12), pages 6867-6883, XP011882249, ISSN: 1536-1276, DOI: 10.1109/TWC.2021.3077762 [retrieved on 2021-10-07] | 1-10, 13-15 | INV. H04L25/03 H04L27/26 |
| A | * figure 2 * <br> * paragraph [00II] – paragraph [0III] * | 11,12 | |
| A | WO 2009/016571 A1 (KONINKL PHILIPS ELECTRONICS NV [NL]; WANG DONG [US] ET AL.) 5 February 2009 (2009-02-05) <br> * abstract * <br> * figure 2 * | 1-15 | |
| A | WO 2013/140763 A1 (NEC CORP [JP]; MARU TSUGUO [JP]) 26 September 2013 (2013-09-26) <br> * figure 5 * <br> * figure 6 * <br> * figure 9 * | 1-15 | TECHNICAL FIELDS SEARCHED (IPC) <br><br> H04L |

The present search report has been drawn up for all claims

| Place of search | Date of completion of the search | Examiner |
|---|---|---|
| Berlin | 24 January 2024 | Douglas, Ian |

EPO FORM 1503 03.82 (P04C01)

2

## ANNEX TO THE EUROPEAN SEARCH REPORT
## ON EUROPEAN PATENT APPLICATION NO.

**EP 23 18 9851**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-01-2024**

| Patent document cited in search report | Publication date | Patent family member(s) | Publication date |
|---|---|---|---|
| WO 2009016571 A1 | 05-02-2009 | TW 200913585 A | 16-03-2009 |
| | | WO 2009016571 A1 | 05-02-2009 |
| WO 2013140763 A1 | 26-09-2013 | JP WO2013140763 A1 | 03-08-2015 |
| | | WO 2013140763 A1 | 26-09-2013 |

EPO FORM P0459

For more details about this annex : see Official Journal of the European Patent Office, No. 12/82